# EUROPÄISCHE PATENTSCHRIFT

(11) **EP 3 449 154 B1**
(45) Veröffentlichungstag und Bekanntmachung des Hinweises auf die Patenterteilung: **15.09.2021**
(21) Anmeldenummer: 17725855.5
(22) Anmeldetag: 28.04.2017
(51) Int. Cl.: F16G 15/04

(54) **KOPPELSTEINELEMENT FÜR EINEN KENTERSCHÄKEL FÜR ANKERKETTEN**
COUPLING PIECE ELEMENT FOR A JOINING SHACKLE FOR ANCHOR CHAINS
ÉTAI DESTINÉ À UNE MANILLE KENTER POUR CHAÎNES D'ANCRES

(30) Priorität: 29.04.2016 DE 102016108051
(43) Veröffentlichungstag der Anmeldung: 06.03.2019
(73) Patentinhaber: Schmiedestück-Vertrieb Feuerstein GmbH, 45525 Hattingen (DE)
(72) Erfinder: STUKENBERG, Till, 44879 Bochum (DE); SVERDLOVA, Nina, 44575 Castrop-Rauxel (DE)
(74) Vertreter: Tarvenkorn, Oliver
(86) Internationale Anmeldenummer: PCT/DE2017/100359
(87) Internationale Veröffentlichungsnummer: WO 2017/186236

(56) Entgegenhaltungen:
- DE-A1- 3 916 284
- DE-A1-102009 050 078
- US-B2- 8 087 227

## Beschreibung

Die Erfindung betrifft ein Koppelsteinelement für einen Kenterschäkel für Ankerketten mit den Merkmalen des Oberbegriffs des Anspruchs 1.

Bei einem Kenterschäkel, wie er beispielsweise aus der US 8 087 227 B2 bekannt ist, handelt es sich um ein mindestens zweiteiliges Verbinderelement. Es wird eingesetzt, um zwei Stücke einer Ankerkette nachträglich miteinander zu verbinden und die Verbindung später wieder auftrennen zu können, oder um ein weiteres Teil, wie insbesondere den Anker selbst, an eine Ankerkette anzuschließen. Wird der Kenterschäkel als Ankerkettenverbinderelement eingesetzt, so muss er symmetrisch ausgebildet sein, sodass er durch Kettenführungen hindurchläuft und genau wie die einzelnen Glieder der Ankerkette in die Kettennuss der Ankerwinde passt.

Am Ende der Kette hingegen kann ein andersartiger Kenterschäkel vorgesehen sein, der aus zwei unterschiedlichen Hälften besteht, wobei die eine Hälfte beispielsweise ebenfalls gerundet wie ein Ankerschäkel und die andere Hälfte V-förmig ausgebildet ist, um eine Zentrierung z. B. eines dort eingehängten Ankerkettengliedes zu bewirken.

Unabhängig von der Funktion und Außenkontur sind die Halbelemente des Kenterschäkels im Bereich der Verbindung gleich ausgebildet. Als Halbelemente sind zwei spazierstockartige Elemente vorgesehen, die seitlich ineinandergeschoben werden können und die Verzahnungen bzw. Verzahnungsaufnahmen aufweisen. Dabei muss das kürzere Ende des spazierstock- oder J-förmigen Halbelements an der Mittelebene enden, damit die Halbelemente aneinander vorbei seitlich ineinandergeschoben werden können. An dem längeren Teil des Halbelements sind mehrere, in parallelen Ebenen übereinanderliegende Verzahnungen vorgesehen. Diese haben in der Seitenansicht die Form einer Sägezahn-Verzahnung. Sobald die Halbelemente miteinander verbunden sind, wird zwischen ihnen ein sogenanntes Koppelsteinelement eingesetzt. Er teilt das durch die ineinander gesteckten Halbelemente gebildete Oval in eine Acht und verhindert zudem, dass die seitlich ineinander geschobenen Halbelemente wieder auseinanderdriften können. Außerdem stützt es die Halbelemente gegeneinander ab, wenn der Kenterschäkel unter Last steht und reduziert damit Verformungen in dem Oval. Der Koppelstein wird durch einen Kerbstift gehalten und gesichert werden, der in eine Bohrung eingetrieben wird, die schräg durch die gesamte Einheit aus den verbundenen Halbelementen und dem dazwischen eingesetzten Koppelstein verläuft.

Der Nachteil der üblichen Sicherung des Koppelsteinelements besteht darin, dass der Sicherungsstift bei Montage eingeschlagen und zusätzlich gegen Herausfallen gesichert werden muss, beispielweise durch einen Bleipfropfen, der in die Sicherungsstiftbohrung eingedrückt wird. Zum Öffnen des Kenterschäkels muss das Koppelsteinelement entfernt werden, wozu der Sicherungsstift wiederum durch Hammerschläge herausgeschlagen werden muss. Dabei können Verletzungen entstehen, insbesondere bei der Person die einen Austreiberbolzen zu halten hat. Eine zerstörungsfreie Entfernung des Koppelsteinelements in großer Tiefe unter Wasser, z. B. durch einen Tauchroboter, ist somit nicht möglich. Möglich ist zwar, durch Trennschneiden das Koppelsteinelement zu zerteilen und damit den Schäkel zu öffnen. Jedoch ist der Kenterschäkel dann nicht mehr ohne weiteres wiederverwertbar, weil ein neues Koppelsteinelement eingesetzt werden muss, und weil die Halbelemente von den Resten des Sicherungsstifts befreit werden müssen, was nur über Wasser möglich ist.

Ein Kettenverbindungsglied ist in der DE 6605034U gezeigt. Zwei Halbelemente können seitlich ineinandergeschoben werden, um ein Kettenverbindungsglied zu bilden. Um die Halbelemente zu sichern, wird ein Spannelement eingesetzt, dass in einer Querbohrung zwei Sicherungsbolzen enthält. Diese können über ein zentrales Spannelement auseinandergetrieben werden und greifen in die Innenflanken der Halbelemente ein, damit das Spannelement in seiner Lage zwischen den miteinander gekoppelten Halbelementen gehalten wird. Allerdings ist das Spannelement um die Achse, die durch die Sicherungsbolzen gebildet ist, rotierbar. Das Spannelement ist auch nicht mehr demontierbar, wenn die Sicherungsbolzen aufgrund von Korrosion in ihrer Bohrung festsetzen. Es ist nicht möglich, eine Kraft auf die Sicherungsbolzen auszuüben, um sie aus ihrer Verriegelungsstellung zurückzubringen. Aus der DE 10 2009 050078 ist zudem ein Koppelsteinelement nach dem Oberbegriff des Anspruchs 1 bekannt.

Die Aufgabe der vorliegenden Erfindung besteht somit darin, ein Koppelsteinelement für einen Kenterschäkel anzugeben, der einfacher zwischen den Halbelementen einsetzbar und entnehmbar ist, und von dem insbesondere selbst im Fall der zerstörenden Entfernung keine Rückstände in den Halbelementen verbleiben.

Diese Aufgabe wird durch ein Koppelsteinelement mit den Merkmalen des Anspruchs 1 gelöst.

Erfindungsgemäß ist ein Koppelsteinelement vorgesehen, das an wenigstens zwei gegenüberliegenden, zu den Innenflanken der Halbelemente hinweisenden Seitenflächen je wenigstens einen Sicherungsbolzen aufweist. Beide Sicherungsbolzen sind vollständig in dem Grundkörper versenkbar und stehen beim Herausschieben nur mit ihrem Ende über die Seitenfläche über, so dass insbesondere auch die Bohrungen in den Halbelementen deutlich in ihrer Länge reduziert sein können und sich nicht mehr bis in die äußeren Zonen neben der Verzahnungsaufnahme erstrecken müssen, welche die gesamten Zugspannungen aufzunehmen haben. Die bei herkömmlicher Befestigung durch die Bohrung gebildeten Schwächungspunkte in den Halbelementen entfallen somit bei dieser bevorzugten Ausführungsform eines Koppelsteinelements.

Der verbesserte Koppelstein sieht zwei getrennte Sicherungsbolzen in einer gemeinsamen Querbohrung vor, die über ein zentrales Spreizelement nach außen geschoben werden können. Damit treten die insbesondere halbkugelförmig gerundeten oder kegelförmigen Enden der Sicherungsbolzen aus dem Koppelstein heraus und können in entsprechende Aufnahmen an den Innenflanken der Halbkettenelemente eingreifen. Seitliche Anschlagflächen, die mit entsprechenden Vor- oder Rücksprüngen an den Innenflanken der Halbkettenelemente zusammenwirken, verhindern, dass sich der Koppelstein um die Sicherungsbolzenachse dreht. Eine Demontage ist nun deutlich einfacher möglich, unter anderem auch mittels eines Tauchroboters. Es muss nämlich nur die vorzugsweise als Spreizelement eingesetzte Innensechskantschraube am Koppelstein gelöst werden, sodass die beiden Sicherungsbolzen wieder nach innen zurückgeschoben werden können. Aufgrund der balligen oder kegeligen Ausbildung der Enden der Sicherungsbolzen werden diese automatisch zurückgeschoben, wenn der Koppelstein aus dem Kenterschäkel herausgezogen wird.

Das erfindungsgemäße Koppelsteinelement ist insbesondere zur Verwendung mit Ankerketten vorgesehen. Bekanntlich ist Korrosion im Salzwasser ein großes Problem, und selbst bei dem Koppelstein der vorliegenden Erfindung wird einkalkuliert, dass die vorteilhafte Entwicklung des Koppelsteinelements in vielen, aber nicht in allen Fällen zu einem einfachen Lösen der Verbindung führen wird. Bei fortgeschrittener Korrosion ist nur noch eine zerstörerische Zerlegung des Koppelsteinelements möglich, wobei der Koppelstein mittig durchtrennt wird, aber die Halbkettenelemente unbeschädigt bleiben. Diese Wirkung, die sich unmittelbar aus dem Anwendungsfall der Ankerkette ergibt, steht aber auch in einem Zusammenhang mit den Vor- und Rücksprüngen. Diese dienen der Führung und der formschlüssigen Festlegung des Koppelsteinelements, sodass in der Hauptbelastungsrichtung gesehen die Halbelemente eines zugehörigen Kenterschäkels zusätzlich aneinander gehalten werden und ein Verdrehen des Koppelsteinelements gegenüber dem Kenterschäkel verhindert wird Der Kenterschäkel soll zwischen seinen Innenflanken durch das Koppelsteinelement abgestützt werden und die abstützende Fläche wird nur in einer bestimmten Lage erreicht. Daher wird durch die Anlageflächen ein Verdrehen unterbunden.

Die Erfindung wird nachfolgend mit Bezug auf die Zeichnungen näher erläutert. Die Figuren zeigen im Einzelnen:
- Fig. 1: ein Koppelsteinelement im Schnitt.
- Fig. 2, 3: Einzelteile eines Kenterschäkels vor der Montage, jeweils in perspektivischer Ansicht; und
- Fig. 4: einen montierten Kenterschäkel im Schnitt.

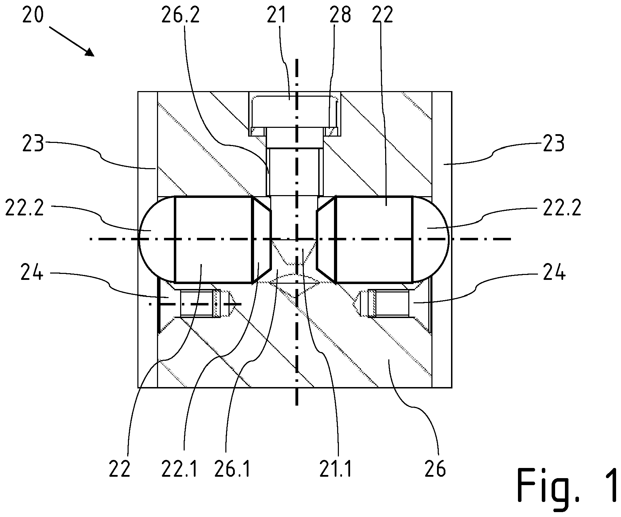

Figur 1 zeigt einen Querschnitt durch eine bevorzugte Ausführungsform eines erfindungsgemäßen Koppelsteinelements 20. Dieses besitzt in einem Grundkörper 26 eine Querbohrung 26.1, in der zwei Sicherungsbolzen 22 verschiebbar angeordnet sind. Diese sind an ihren nach außen weisenden Enden 22.2 halbkugelförmig abgerundet. Sie werden durch Schrauben 24 vor dem Herausfallen gesichert. An den zueinander weisenden Innenflächen besitzen die Sicherungsbolzen 22 jeweils einen kegelförmigen Abschnitt 22.1. Senkrecht zur Querbohrung 26.1 ist eine Gewindebohrung 26.2 ausgebildet, in der ein Spreizelement 21 mit einem Gewindeabsatz aufgenommen ist. Hierbei handelt es sich um ein schraubenartiges Element, das einen Schraubenkopf aufweist, der in einer Senkung aufgenommen wird. Unter dem Schraubenkopf kann noch ein Federring 28 eingelegt sein. Der Schraubenkopf kann einen üblichen Antrieb enthalten wie beispielsweise einen Innensechskant.

Der in die Querbohrung 26.1 hineinragende Teil des Spreizelements 21 ist zunächst glatt zylindrisch ausgebildet und an seinem Ende kegelstumpfförmig angespitzt. Mit dem Einschrauben des Spreizelementes 21 in den Grundkörper 26 des Koppelsteinelements 20 trifft die Spitze 21.1 auf die kegelförmigen Absätze 22.1 der Sicherungsbolzen 22 und drückt diese somit nach außen. Die gerundeten Außenseiten der Sicherungsbolzen 22 greifen in Bohrungen ein, die an den Innenflanken der Halbelemente des Kenterschäkels ausgebildet sind. Damit kann das Koppelsteinelement 20 zwischen den beiden Halbelementen festgelegt werden. Es blockiert die ineinandergeschobenen Halbelemente und hält diese unter Belastung auf Abstand, sodass keine zu großen Verformungen und damit einhergehende Erhöhungen der Zugspannungen in den Halbelementen entstehen.

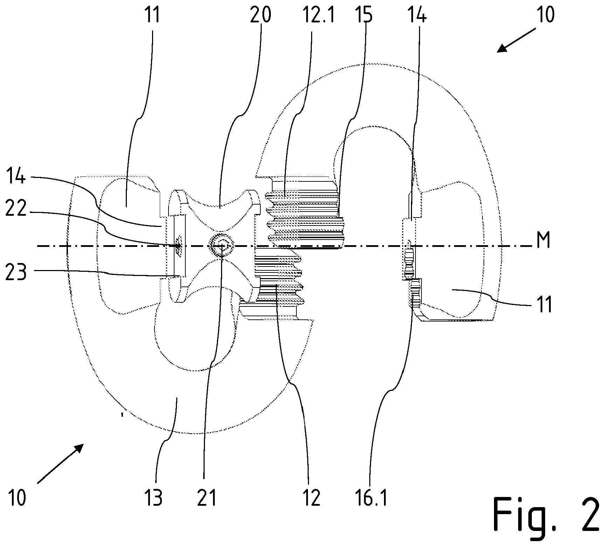

In Figur 2 sind zwei gleichartig ausgebildete Halbelemente 10 lagerichtig für die Montage dargestellt. Die Halbelemente 10 müssen so positioniert werden, dass die Stirnflächen der kurzen Schenkel 12 in der Mittelebene aneinander anliegen. Die Verbindung der Halbelemente 10 erfolgt durch seitliches Einschieben, so dass an beiden Seiten die Verzahnungen ineinandergreifen. Dabei wird jeweils der mit einer Außenverzahnung 12.1 versehene Bereich des kurzen Schenkels 12 in den Hohlraum 16 mit der Innenverzahnung 16.1 an einem langen Schenkel 11 eingeschoben. Die Montagerichtung ist also genau quer zur Längsachse bzw. zur Belastungsrichtung.

Um die beiden ineinandergeschobenen Halbelemente 10 aneinander zu sichern und um außerdem eine Abstützung der beiden langen Schenkel 11 unter Belastung zu ermöglichen, wird zwischen den Schenkeln 11, 12 das Koppelsteinelement 20 eingesetzt. Dieses besitzt Rücksprünge 23 an den Seitenflächen, die zur Anlage an entsprechenden Vorsprüngen 14, 15 an den Halbelementen 10 vorgesehen sind. Die formschlüssige Führung über die Kanten der Vor -und Rücksprünge 14, 15, 23 verhindert eine Verdrehung des Koppelsteinelements 20. Die Sicherung des Koppelsteinelements 20 in Z-Richtung erfolgt durch Drehen des Spreizelements 21 mittels eine Schraubenschlüssels, so dass die seitlich austretenden Enden der Sicherungsbolzen 22 herausgeschoben werden, um in Aufnahmen an den Innenflanken der ineinander gesteckten Halbelemente 10 eingreifen.

Mit dem Einsetzen des Koppelsteinelements 20 zwischen den Halbelementen 10 ist ein Kenterschäkel 100 fertig montiert.

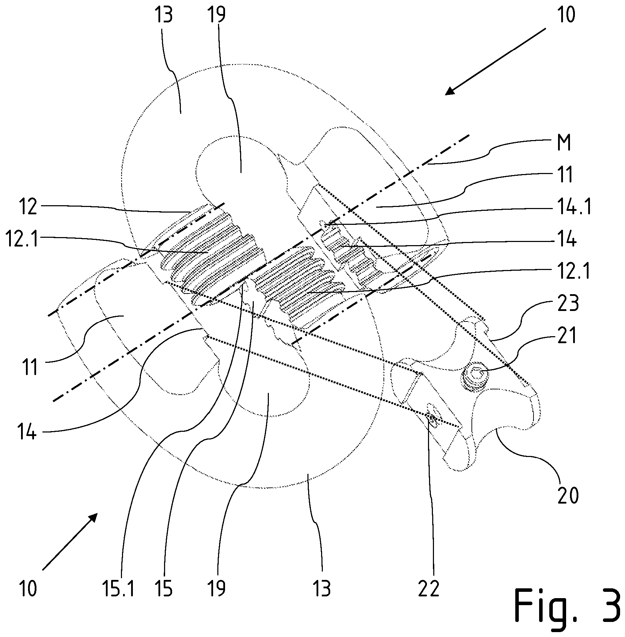

Figur 3 zeigt die Teile des Kenterschäkels 100 mit den beiden Halbelementen 10 und dem Koppelsteinelement 20 nochmals in einer etwas anderen Perspektive. Erkennbar ist hier noch, dass die nach innen weisenden Flächen des kurzen Schenkels 12 keine Verzahnung aufweisen, da dort auch kein Eingriff mit einem Gegenstück am jeweiligen langen Schenkel 11 möglich ist. Wohl aber ist an der Innenseite des kurzen Schenkels 12 ein Vorsprung 15 ausgebildet, um den Vorsprung 14 nach dem Ineinanderschieben der Halbelemente 10 entsprechend auszufüllen und zu ergänzen.

Die Mittelachse der Sicherungsbolzen 22 liegt genau in der Mittelebene M zwischen den Halbelementen 10, sodass die Aufnahmebohrung für die Sicherungsbolzen 22 ebenfalls zweigeteilt ist. Wie in Figur 3 erkennbar, ist eine Hälfte 14.1 der Bohrung an dem Vorsprung 14 an der Innenseite des langen Schenkels 11 erkennbar. Eine weitere Hälfte 15.1 der Bohrung ist am Vorsprung 15 des kurzen Schenkels 12 ausgebildet. Mit dem Zusammenschieben der Halbelemente 10 entsteht eine geschlossene Bohrung, in welche die Sicherungsbolzen 22 beziehungsweise deren gerundete Enden 22.2, eingreifen können.

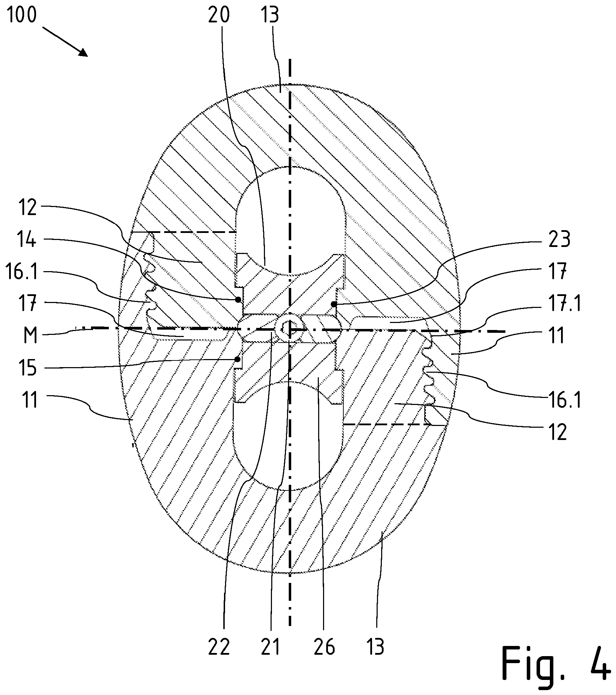

Figur 4 zeigt einen fertig montierten Kenterschäkel 100 im Schnitt. Die Verzahnungen 12.1 am kurzen Schenkel 12 außen und an der Innenseite des Aufnahmeraums 16 greifen vollständig ineinander. Oberhalb der Verzahnung 12.1 am kurzen Schenkel 12 jedoch erweitert sich der Aufnahmeraum 16 in einen Hohlraum 17, der auch bei dem fertig montierten Kenterschäkel 100 leer bleibt. Wesentlich ist hierbei, dass sich der Hohlraum 17 mit einer seitlichen Flanke 17.1 bereits von der letzten Zahnspitze 16.3 in der zuoberst liegenden Verzahnungsebene aus grob in Richtung der Längsachse des Kenterschäkels 100 wegläuft, also parallel zur Längsachse oder in einem spitzen Winkel dazu. Mit einer weiteren Rundung geht die seitliche Flanke 17.1 des Hohlraums 17 in einen Dachbereich über. Bei dem unter Zug stehenden Kenterschäkel 100 werden die Kräfte auf die quer zur Längsachse ausgerichteten Anlageflächen der Verzahnung abgeleitet. Durch die Anordnung des Hohlraumes 17, der den eigentlichen Aufnahmeraum 16 zur Aufnahme der Verzahnung 12.1 ergänzt, werden die unter Last auftretenden Zugspannungen wesentlich besser umgeleitet. Eine punktuelle Spannungskonzentration wird vermieden. Die Spannungen werden vielmehr am Hohlraum 17 vorbei in den Anfangsbereich des jeweiligen langen Schenkels 11 und von dort in die gebogene Spange 13 umgeleitet.

Die Sicherungsbolzen 22 greifen in die Ausnehmungen an den Halbelementen ein. Ein Rotieren des Koppelsteinelements 20 um die Achse der Sicherungsbolzen 22 wird dadurch verhindert, dass die Seitenkanten des Rücksprungs 23 am Koppelsteinelement 20 an Seitenkanten der Vorsprünge 14, 15 an den Halbelementen 10 anliegen.

## Patentansprüche

1. Koppelsteinelement (20) für einen Kenterschäkel (100) für Ankerketten, welcher zwei miteinander koppelbare Halbelemente (10) umfasst, zwischen denen das Koppelsteinelement (20) einsetzbar ist, wobei:
- das Koppelsteinelement (20) einen Grundkörper (26) mit wenigstens einer Querbohrung (26.1) aufweist, in die wenigstens zwei Sicherungsbolzen zum Eingriff in Ausnehmungen (14.1, 15.1) an den Innenflanken der Halbelemente (10) einsetzbar ist,
- zwei Sicherungsbolzen (22) vorgesehen sind, die in wenigstens einer Querbohrung (26.1) im Grundkörper (26) gelagert und mittels wenigstens eines Spreizelements (21) nach außen verschiebbar sind;
- beide Sicherungsbolzen (22) axial fluchtend in einer gemeinsamen, durch den Grundkörper (26) hindurch laufenden Querbohrung (26.1) angeordnet sind;
- beide Sicherungsbolzen (22) mittels eines gemeinsamen, zwischen den Sicherungsbolzen (22) eingreifenden Spreizelements (21) nach außen verschiebbar sind;
- dass der Grundkörper (26) an seinen den Halbelementen (10) zuzuweisenden Seitenflächen Vor- und/oder Rücksprünge (23) zur formschlüssigen Führung an den Halbelementen (10) aufweist;
- dass die seitlich nach außen heraustretenden Enden (22.2) der Sicherungsbolzen (22) ballig oder kegelig ausgebildet sind.
**dadurch gekennzeichnet,**
- **dass** das Spreizelement (21) ein schraubenartiges Element ist, das einen Schraubenkopf aufweist, der in einer Senkung im Grundkörper (26) aufgenommen wird und einen Antrieb enthält und einen Gewindeabsatz aufweist, der in einer Gewindebohrung (26.2) im Grundkörper (26) aufgenommen ist, die senkrecht zur Querbohrung (26.1) ist und
- **dass** das Spreizelement (21) an seinem von dem Schraubenkopf abgewandten Ende eine Spitze (21.1) aufweist.

2. Koppelsteinelement (20) nach Anspruch 1, **dadurch gekennzeichnet, dass** an wenigstens einer Seite des Spreizelements (21) der Sicherungsbolzen (22) der Länge nach in mehrere Bolzenteilelemente geteilt ist.

3. Koppelsteinelement (20) nach Anspruch 1, **dadurch gekennzeichnet, dass** die Sicherungsbolzen (22) durch den Kopf von seitlich in den Grundkörper (26) eingesetzten Schrauben (24) vor dem Herausfallen aus der Querbohrung (26.1) gesichert sind.

4. Kenterschäkel (100) für Ankerketten, welcher zwei seitlich ineinander einschiebbare Halbelemente (10) umfasst, und mit einem zwischen den Halbelementen (10) einsetzbaren und daran verriegelbaren Koppelsteinelement (20) nach einem der vorhergehenden Ansprüche.

5. Kenterschäkel (100) nach Anspruch 4, **dadurch gekennzeichnet, dass** die Halbelemente (10) jeweils eine L- oder J-förmige Konfiguration aufweisen, bei der am Ende eines kurzen Verbindungsschenkels (12) eine Außenverzahnung (12.1) mit mehreren parallelen Verzahnungsebenen ausgebildet ist und bei der am Ende eines langen Verbindungsschenkels (11) eine Aufnahmekammer (16) ausgebildet ist, die eine Innenverzahnung (16.1) mit mehreren parallelen Verzahnungsebenen besitzt, in welche die Außenverzahnung (12.1) des kurzen Verbindungsschenkels (12) eingreift, wobei die Verbindungsschenkel (11, 12) über eine gekrümmte Spange (13) miteinander verbunden sind.

6. Kenterschäkel (100) nach Anspruch 4 oder 5, **dadurch gekennzeichnet, dass** die Querbohrung senkrecht zur Längsachse des Koppelsteinelements (20) und des Kenterschäkels (100) ausgerichtet ist.

7. Kenterschäkel (100) nach einem der Ansprüche 4 bis 6, **dadurch gekennzeichnet, dass** die Mittelachse der Sicherungsbolzen (22) in einer Mittelebene (M) zwischen den Halbelementen (10) liegt und eine Aufnahmebohrung für die Sicherungsbolzen (22) in zwei Hälften (14.1, 15.1) zweigeteilt ist.

## Claims

1. Coupling block element (20) for a Kenter shackle (100) for anchor chains that has two half-elements (10) that are able to be coupled together, between which the coupling block (20) is able to be inserted, wherein:
- the coupling block element (20) has a main body (26) with at least one transverse bore (26.1) into which at least two securing pins for engaging in cutouts (14.1, 15.1) in the inner flanks of the half-elements (10) are able to be inserted,
- two securing pins (22) are provided, which are mounted in at least one transverse bore (26.1) in the main body (26) and are able to be displaced outwardly by means of at least one expansion element (21);
- the two securing pins (22) are arranged in an axially aligned manner in a common transverse bore (26.1) passing through the main body (26);
- the two securing pins (22) are able to be displaced outwardly by means of a common expansion element (21) engaging between the securing pins (22);
- the main body (26) has, on its side faces that face the half-elements (10), protrusions and/or recesses (23) for form-fitting guidance on the half-elements (10);
- the ends (22.2), emerging outwardly to the sides, of the securing pins (22) are formed in a spherical or conical manner,
**characterized in that**
- the expansion element (21) is a screw-like element which has a screw head that is accommodated in a countersink in the main body (26) and contains a drive and has a threaded shoulder that is received in a threaded bore (26.2) in the main body (26), said threaded bore being perpendicular to the transverse bore (26.1), and
- **in that** the expansion element (21) has a point (21.1) at its end remote from the screw head.

2. Coupling block element (20) according to Claim 1, **characterized in that**, on at least one side of the expansion element (21), the securing pin (22) is subdivided by length into a plurality of pin subelements.

3. Coupling block element (20) according to Claim 1, **characterized in that** the securing pins (22) are secured against falling out of the transverse bore (26.1) by the head of screws (24) inserted laterally into the main body (26).

4. Kenter shackle (100) for anchor chains, which comprises two half-elements (10) that are able to be slid into one another, and having a coupling block element (20) according to one of the preceding claims, which is able to be inserted between the half-elements (10) and to be locked thereto.

5. Kenter shackle (100) according to Claim 4, **characterized in that** the half-elements (10) each have an L- or J-shaped configuration, in which, at the end of a short connecting leg (12), an external toothing (12.1) having a plurality of parallel toothing planes is formed, and in which, at the end of a long connecting leg (11), a receiving chamber (16) is formed, which has an internal toothing (16.1) with a plurality of parallel toothing planes, into which the external toothing (12.1) of the short connecting leg (12) engages, wherein the connecting legs (11, 12) are connected together via a curved clasp (13).

6. Kenter shackle (100) according to Claim 4 or 5, **characterized in that** the transverse bore is oriented perpendicularly to the longitudinal axis of the coupling block element (20) and of the Kenter shackle (100).

7. Kenter shackle (100) according to one of Claims 4 to 6, **characterized in that** the central axis of the securing pins (22) lies in a central plane (M) between the half-elements (10) and a receiving bore for the securing pins (22) is halved into two halves (14.1, 15.1).

## Revendications

1. Élément d'accouplement (20) pour une manille Kenter (100) pour des chaînes d'ancres, qui comprend deux demi-éléments (10) accouplables ensemble, entre lesquels l'élément d'accouplement (20) peut être inséré,
- l'élément d'accouplement (20) comprenant un corps de base (26) muni d'au moins un alésage transversal (26.1), dans lequel au moins deux boulons de fixation destinés à entrer en prise dans des évidements (14.1, 15.1) sur les flancs intérieurs des demi-éléments (10) peuvent être insérés,
- deux boulons de fixation (22) étant prévus, qui sont montés dans au moins un alésage transversal (26.1) dans le corps de base (26) et qui peuvent se déplacer vers l'extérieur au moyen d'au moins un élément d'écartement (21) ;
- les deux boulons de fixation (22) étant agencés en alignement axial dans un alésage transversal (26.1) commun, traversant le corps de base (26) ;
- les deux boulons de fixation (22) pouvant être déplacés vers l'extérieur au moyen d'un élément d'écartement commun (21), entrant en prise entre les boulons de fixation (22) ;
- le corps de base (26) comprenant, sur ses surfaces latérales orientées vers les demi-éléments (10), des protubérances et/ou des retraits (23) pour le guidage par complémentarité de forme sur les demi-éléments (10) ;
- les extrémités (22.2) faisant saillie latéralement vers l'extérieur des boulons de fixation (22) étant configurées sous forme bombée ou conique,
**caractérisé en ce que**
- l'élément d'écartement (21) est un élément de type vis, qui comprend une tête de vis, qui est reçue dans un creux dans le corps de base (26) et contient un entraînement et présente un épaulement fileté, qui est reçu dans un alésage fileté (26.2) dans le corps de base (26), qui est perpendiculaire à l'alésage transversal (26.1), et
- l'élément d'écartement (21) comprend une pointe (21.1) à son extrémité détournée de la tête de vis.

2. Élément d'accouplement (20) selon la revendication 1, **caractérisé en ce que**, sur au moins un côté de l'élément d'écartement (21), le boulon de fixation (22) est divisé longitudinalement en plusieurs éléments partiels de boulon.

3. Élément d'accouplement (20) selon la revendication 1, **caractérisé en ce que** les boulons de fixation (22) sont fixés par la tête de vis (24) insérées latéralement dans le corps de base (26) pour éviter qu'ils ne tombent de l'alésage transversal (26.1).

4. Manille Kenter (100) pour des chaînes d'ancres, qui comprend deux demi-éléments (10) pouvant être enfilés latéralement l'un dans l'autre, et munie d'un élément d'accouplement (20) selon l'une des revendications précédentes pouvant être inséré entre les demi-éléments (10) et y être verrouillé.

5. Manille Kenter (100) selon la revendication 4, **caractérisée en ce que** les demi-éléments (10) présentent chacun une configuration en forme de L ou de J, dans laquelle une denture extérieure (12.1) est formée à l'extrémité d'une branche de liaison courte (12), avec plusieurs plans de denture parallèles, et dans laquelle une chambre de réception (16) est formée à l'extrémité d'une branche de liaison longue (11), qui présente une denture intérieure (16.1) avec plusieurs plans de denture parallèles, dans laquelle la denture extérieure (12.1) de la branche de liaison courte (12) entre en prise, les branches de liaison (11, 12) étant reliées entre elles par l'intermédiaire d'une attache incurvée (13).

6. Manille Kenter (100) selon la revendication 4 ou 5, **caractérisée en ce que** l'alésage transversal est orienté perpendiculairement à l'axe longitudinal de l'élément d'accouplement (20) et de la manille Kenter (100) .

7. Manille Kenter (100) selon l'une quelconque des revendications 4 à 6, **caractérisée en ce que** l'axe médian des boulons de fixation (22) se situe dans un plan médian (M) entre les demi-éléments (10) et un alésage de réception pour les boulons de fixation (22) est divisé en deux moitiés (14.1, 15.1).
